# EUROPEAN PATENT SPECIFICATION

(11) **EP 3 322 618 B1**
(45) Date of publication and mention of the grant of the patent: **22.05.2019**
(21) Application number: 16741484.6
(22) Date of filing: 08.07.2016
(51) Int. Cl.: B60R 22/28

(54) **RETRACTOR WITH CRUSHABLE SPOOL INSERT**
GURTAUFROLLER MIT ZERDRÜCKBAREN EINSATZ EINER SPULE
RETRACTEUR DE CEINTURE DE SECURITE COMPORTANT INSERT DE BOBINE ÉCRASABLE

(30) Priority: 13.07.2015 US 201562191677 P
(43) Date of publication of application: 23.05.2018
(73) Proprietor: Key Safety Systems, Inc., Sterling Heights, MI 48314 (US)
(72) Inventor: GRZIC, Rudi, Sterling Heights, Michigan 48314 (US); ARNOLD, David R., Macomb, Michigan 48044 (US); KELLER, Gerald, Shelby Township, Michigan 48317 (US); RRUMBULLAKU, Besi, Rochester Hills, Michigan 48307 (US)
(74) Representative: Gislon, Gabriele
(86) International application number: PCT/US2016/041506
(87) International publication number: WO 2017/011304

(56) References cited:
- JP-A- H07 101 310
- JP-A- H10 129 414
- US-A- 4 206 887
- US-A- 4 256 273

## Description

### TECHNICAL FIELD

The present invention relates to seat belt retractors and more particularly to a seat belt retractor having an energy absorbing mechanism included therein.

### BACKGROUND OF THE INVENTION

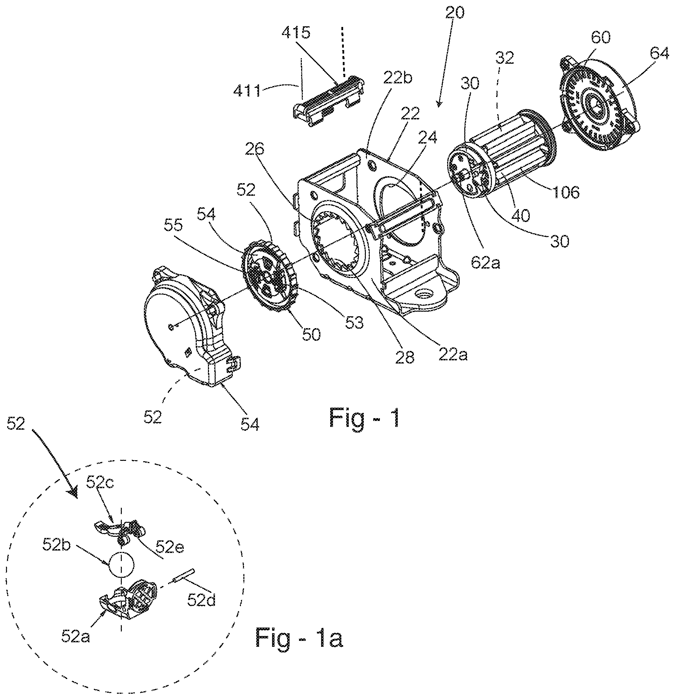

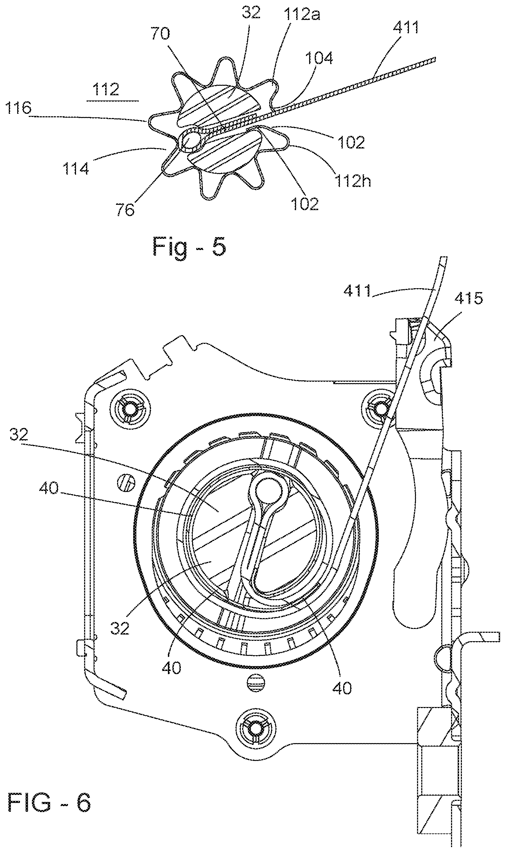

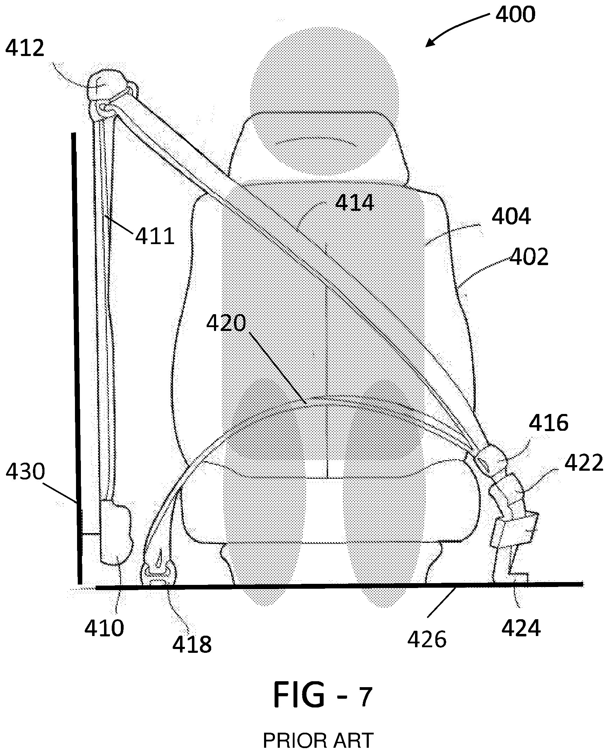

Reference is briefly made to figure 7 which illustrates the general layout of a 3-point safety belt system 400. Also shown in figure 7 is a vehicle seat 402 with an occupant 404 seated thereon. The multi-point safety belt system 400 includes a seat belt retractor 410 having a spool, not shown in figure 7, about which a length of seat belt 411 is wound. The seat belt is wound about the spool of the retractor and leaving the retractor passage through a web guide 415. The seat belt is not shown wound about the spool in figure 1 but is in figure 6. The seat belt extends from the retractor to an anchor also known as a D-ring or web guide 412 located at shoulder height. The portion of the seat belt 411 extending across the upper torso of the occupant is referred to as the shoulder belt 414. The shoulder belt is typically slidably received within a tongue 416 and extends across the occupant's lap where it is terminated at another anchor 418. That portion of the seat belt extending across the lap is historically referred to as a lap belt 420. The tongue 416 is received within a seat belt buckle 422 which is supported by another anchor 424. As illustrated, anchor 424 and 418 are shown secured to the vehicle floor 426 however, these anchors can be secured to a portion of the vehicle seat. Similarly the retractor 410 is shown mounted proximate to or on the B-pillar 430 of the vehicle and, as known in the art the retractor can also be seat mounted. As known in the art another type of retractor is an ALR retractor with ALR standing for "always locking retractor." This type of retractor has a spool and a lock mechanism which enters into a locked mode of operation after the seat belt has been pulled from the belt. The present invention is applicable to this type of retractor as well. The ALR retractor is often used as part of a 2-point seat belt system.
Document US 4206887 discloses a safety belt with roller arrangement, wherein the winding mechanism of the roller can take a first form, comprising a volume enveloped by the strap of the safety belt, and a secondo form comprising a smaller volume enveloped by the strap. Document US 4256273 discloses a safety belt retractor having a spindle provided with an outer layer formed of a material which is capable of absorbing energy by substantially inelastic deformation. When the safety belt is subject to shock - loading exceeding a predetermined level, this outer layer is crushed, leading to a reduction in the effective diameter of the spindle and thereby allowing an additional length of the belt to be paid out after the spindle has been loaded

### SUMMARY OF THE INVENTION

More particularly, the present invention comprises a seat belt retractor in accordance with independent claim 1 and a method in accordance with independent claim 5.

### BRIEF DESCRIPTION OF THE DRAWINGS

Figure 1 is an exploded view of the seat belt retractor incorporating the present invention.
Figure 1a shows further details of a locking mechanism of the retractor.
Figure 2 is another exploded view showing a seat belt retractor, a portion of the seat belt, a pin and an energy absorbing insert.
Figure 2a shows further details of the retractor.
Figure 3 is a cross-sectional view showing only a section of the spool with an energy absorbing collapsible member mounted thereon.
Figure 4 is another cross-sectional view showing a seat belt retractor incorporating the present invention mounted within a retractor frame.
Figure 5 is an isolated view showing a spool, collapsible member and a portion of a seat belt extending from the spool.
Figure 6 shows the seat belt (also referred to as seat belt webbing) wound about the collapsible member and the spool in state after it has protected an occupant in a crash.
Figure 7 represents a prior art 3-point seat belt system.
Figure 8 shows a sheet of steel capable of being formed into a collapsible member.
Figure 8a shows a composite structure formed as a sheet also capable of being formed into a collapsible member.
Figure 9 shows the sheet of steel formed into a plurality of oscillations.

### DETAILED DESCRIPTION OF THE DRAWINGS

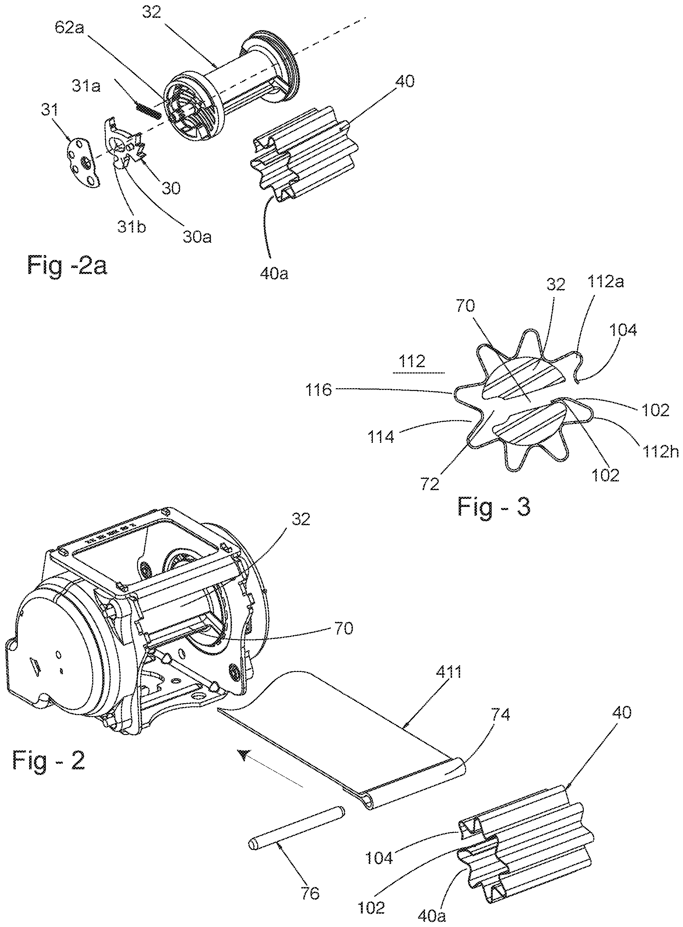

Figure 1 shows the major components of a seat belt retractor 20 incorporating the present invention. Retractor 20 includes a multi-sided frame 22 having two oppositely positioned openings 24 and 26. The frame 22 proximate opening 26 includes a plurality of teeth 28 which are engaged in a known manner by teeth 30 associated with a lock pawl 30a which is part of a locking mechanism carried by the spool 32. The pawl includes a slot 31b which is moved by operation of a lockcup in a known manner to initiate locking of the retractor. The pawl is held to the spool by a plate 31. A return spring 31a biases the lock pawl to its initial position. An energy absorbing collapsible member 40 is shown mounted about the spool in figure 1 and displaced from the spool 32 in figure 2.

The retractor shown in figure 1 is representative of emergency locking seat belt retractors (ELR) which includes a plurality of inertial sensors such as web sensor 50 and a vehicle sensor 52 which form part of a locking mechanism. The vehicle sensor 52 is mounted within a cover 54 and the cover is mounted to a frame side 22a. When vehicle deceleration exceeds a known quantity the vehicle sensor initiates the locking up of the retractor in concert with the lockcup. As mentioned as the lockcup moves the lock pawl into a locked position, locking the spool from further rotation. Additionally, if the seatbelt is withdrawn at a sufficiently fast speed, the web sensor will initiate lockup also in concert with the lockcup. As is known in the art, seat belt retractors typically include a rewind spring 60 which engages an end of axle 62 associated with spool 32. The spool may also have another axle 62a about which the lockcup, lock pawl and web sensor can be mounted. The rewind spring 60 is covered by a cover 64 which is secured to the frame side 22b. One such vehicle sensor with a rotating lockcup is shown in US patent application 20080290203A1 which is incorporated herein by reference. This patent also describes a typical web sensor such as web sensor 50 which rotates with the spool. US patent 6679447 shows another version of a lockcup and web sensor which is also incorporated herein by reference.

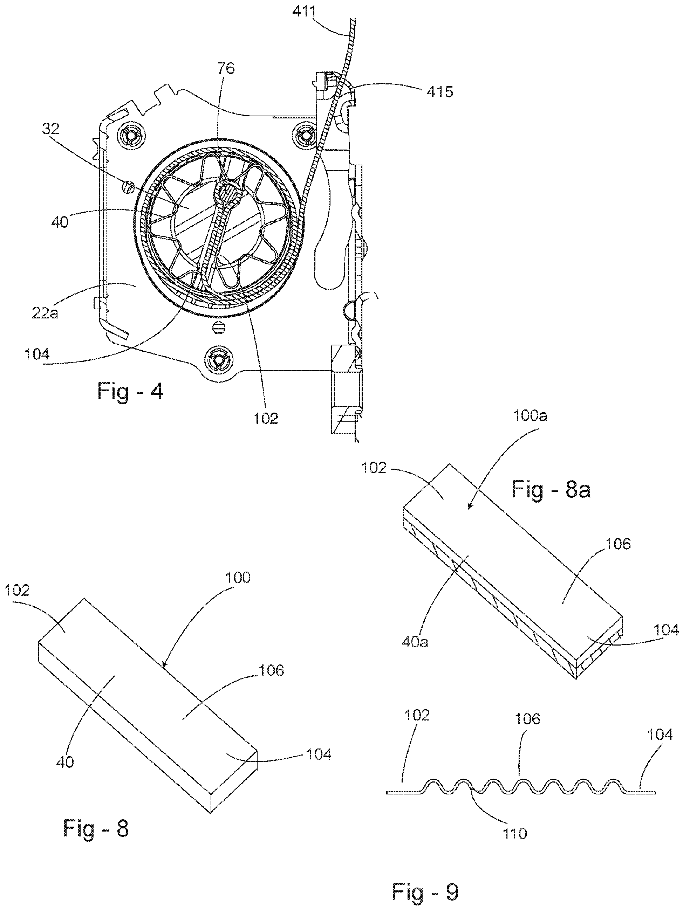

The typical spool 32 of the seat belt retractor 410 includes a slot 70 as shown in figures 2 and 3; one end of the slot 72 is an enlarged to receive a looped end 74 of the seat belt 411. A pin such as a steel pin 76 is inserted within the looped end 74. After the seat belt 411 is pulled through slot 70 the looped end 74 with the pin 76 therein is captured within the slot as illustrated in figures 4 - 6.

Collapsible member 40 is essentially a cylindrically shaped member with undulations that can be made from spring or heat treated steel, a plastic or a composite plastic and composite foam. In one embodiment the collapsible member 40 can be made from a sheet 100 of AISI 1050 Heat Treated Steel. In general sheet 100 should have the following physical characteristics: sufficiently long length to cover most of the circumference of the spool when not stressed and when stressed longer than the circumference of the spool, having a width preferably not exceeding that of the spool, and an elongation rate permitting the undulations to collapse in a controlled manner. In testing with the collapsible member made of steel the elongation rate was about at least 9%.

As shown in figures 8, 8a and 9, sheet 100 has a first end 102, a second end 104 and a body 106. The sheet 100 is bent into a wave-like shaped structure 110. As illustrated in the various figures the member 40 includes approximately eight waves, undulations or oscillations 112a - 112h; the number and size of waves, undulations or oscillations can vary with the load limiting level(s) and duration characteristics desired. End 102 is formed with a downturned curvature while end 104 is formed with an upturned curvature. The collapsible member 40 with the waves is formed into a cylindrical-like shape 40a such as that illustrated in figure 2 and then positioned about the spool 32. Basically as shown the collapsible member 40 takes on the shape of a cylinder with an open side. As can be seen in the various figures, such as figures 3, 4, 5 and 6, end 102 of member 40 is inserted within the narrow end of slot 70. The folded body portion 106a of the member 40 (or sheet100) is positioned about the periphery of the spool with end 104 offset or spaced from end 102 and the end of slot 70.

If the collapsible member 40 is made of energy absorbing material such as rigid polyurethane foam or Aluminum honeycomb structure it could be molded into the same shape as the illustrated collapsible member 40. If the collapsible member 40 is made of a composite foam it is preferable to use a microcellular plastic foam that has been specially formed to create micropores or cells in the polymer matrix (the foam is injected with gas during the molding process to create small holes/ or pockets of air inside of it). This would allow the insert to have a density reduction of 5 percent of that of original polymer material.

Each oscillation 112 includes a high point 116 and a low point 114. In the preferred embodiment of the invention each of the low points 114 is designed to be in contact with the periphery or body of the spool. This positioning can be achieved upon forming collapsible member 40 into the required cylindrical shape. Additionally, even if the cylindrically shaped insert 40 does not have its low points 114 fall on the body of the spool, the member should be designed such that with a modest radial pressure exerted by the adjacent or first loops of seat belt the low points will be properly positioned against the periphery or body of the spool.

Figure 4 shows the spool 32, collapsible member 40 and spool installed on the frame 22 with the seat belt extending out of the spool and wound about the collapsible member 40. In figure 5 the spool has been eliminated to more clearly show the relationship between the spool, member 40, seat belt and pin. In operation, the amount of seat belt remaining wound about the spool and collapsible member 40 after an accident will vary with the size of the occupant wearing the seat belt. With a larger occupant which may be seated relatively far from the steering wheel or instrument panel the number of turns of seat belt remaining on the member 40 and spool will be less than the number of turns remaining on the member 40 and spool for the smaller sized occupant seated closer to the steering wheel or instrument panel.

Figure 6 shows retractor 20 with a determinable number of loops of seat belt about the collapsible member 40. The seat belt 411 extends upwardly toward the web guide 415 as illustrated in figure 6. During a forward or oblique accident the occupant 404 will move generally forward, the retractor will lock momentarily preventing further protraction of seat belt webbing from the retractor. As the occupant moves forward, a reaction force F resulting from the crash will be transferred to the shoulder belt 414 and then down to the seat belt locked about the insert. As the crash forces are applied to the inner loops of seat belt about the member 40 compressive force FC is exerted on the top portions of the collapsible member 40. This compressive force FC begins to deform the undulations, oscillations or waves of the collapsible member 40. As the crash continues the insert elongates with end 104 moving between adjacent loops of seat belt as shown in figure 6. Viewed in another way, the seat belt is stressed radially and tangentially in relation to the spool by an applied force during the accident, causing the loops of seat belt about the collapsible member to tighten; this tightening force is an inward radial force, acting in one direction to crush or compress the undulations toward the spool and also radially push a loose end 104 of the member between two layers of seat belt. As the member 40 is compressed and then extends the member 40 absorbs a portion of the crash energy and also permits the seat belt to protract or extend from the retractor in a controlled manner such that the occupant's forward motion is controlled during the crash. The controlled manner in which the occupant moves during the crash is much the same as if the torsion bar were included in the retractor. With the present invention an interesting phenomenon occurs. For example, if at the initiation of lockup of the retractor there were X loops of webbing about the insert, that same number of loops will exist after the insert has collapsed. What changes is the radius or diameter of these loops. As can be appreciated the amount of seat belt permitted to extend or protract from the retractor as the insert collapses is proportional to the change in diameter of the loops.

Many changes and modifications in the above-described embodiment of the invention can, of course, be carried out without departing from the scope of the claims. Accordingly, that scope is intended to be limited only by the scope of the appended claims.

## Claims

1. A seat belt retractor (20) comprising
a spool (32) mounted for rotation to a frame (22); the spool (32) having a locked mode of operation and a freewheeling mode of operation,
one or both of a web sensor (50) and/or vehicle sensor for initiating lockup of the spool (32);
a collapsible member (40) positioned about the circumference of the spool (32), the collapsible member (40) having a first end (102), a second end (104) and a middle therebetween, the collapsible member (40) initially positioned with the first end (102) secured to or otherwise located against the spool (32), the middle includes a plurality of undulations (112a - 112h), formed by adjacent peaks and valleys, each valley configured to initially lie in close proximity to the circumference of the spool (32), the second end (104) of the collapsible member (40) initially positioned adjacent and spaced from the first end (102) **characterized in that** the second end is configured to slide over the first end (102) during operation; the seat belt (411) upon exiting the slot (70) of said retractor (20) is rolled about the undulations (112a - 112h) of the collapsible member (40) and **in that** the second end (104) of the collapsible member (40) is configured to slide in between an adjacent loop of the seat belt (411) and be covered by another loop of the seat belt (411).

2. The retractor (20) according to claim 1 wherein during an accident the seat belt (411) is stressed by an applied force, and with the spool (32) locked this force migrates through the number of loops located about the collapsible member (40), causing the undulations (112a - 112h) to be pressed against the center of the spool (32).

3. The seat belt retractor (20) according to claim 2 wherein the seat belt (411) is stressed radially and tangentially in relation to the spool (32) by an applied force, causing the loops of seat belt (411)about the collapsible member (40) to tighten about the collapsible member (40), wherein this tightening force is an inward radial force, acting in one direction to crush or compress the undulations (112a - 112h) toward the spool (32) and also radially push a loose end (104) of the member between two layers of seat belt (411).

4. The seat belt according to claim 1 wherein the collapsible member (40) is made from one of spring steel, heat treated steel, plastic or composite foam.

5. A method of controllably retarding forward movement of a vehicle occupant (404) in a crash when using a system according to claim 1, the system comprising:
a) a multi-point seat belt system comprising a seat belt retractor (20) with a spool (32), the spool having a locked mode of operation and a freewheeling mode of operation,
b) a seat belt (411) characterized as having a known elongation rate under stress,
c) a collapsible member (40) wrapped about a center or body portion of the spool (32) of the retractor (20), the member (40) having an initial diameter d1 when unstressed and collapsible to a lesser diameter of d2 under stress;
the method comprising the steps of:
i. sensing an accident and locking the spool (32) from rotating;
ii. permitting the occupant (404) to move forward and load the seatbelt;
iii. permitting the seat belt (411) to elongate and in doing so dissipating the energy acting on the occupant (404) during the crash;
iv. transferring the occupant's crash force on the seat belt (411) to a compressive force to tend to collapse the member (40);
v. generating a retarding force on the occupant (404) in proportion to the degree by which the collapsible member (40) collapses.
**characterized in** comprising the step of
vi. permitting a free portion or end of the collapsing member (40) to slide between adjacent loops of the seat belt (411) as the collapsing member (40) collapses.

6. The method according to claim 5 including the step of permitting seat belt (411) to pay out in proportion to the degree by which the member (40) has radially collapsed.

7. The method according to claim 5 wherein prior to the initiation of collapsing of the member (40), there are X rolls of seat belt looped about the center portion of the spool (32) and wherein as the seat belt (411) is permitted to pay out the number of loops remains the same.

8. The method according to claim 5 wherein the payout of the seat belt (411) is controlled by the shape of the undulation or height and length describing the undulation.

9. The method according to claim 5 wherein the collapsing member (40) is formed out of plastic.

10. The method according to claim 5 wherein the collapsing member (40) is formed out of spring hardened steel, a composite plastic and polymeric foam material.

## Patentansprüche

1. Sitzgurtaufroller (20), Folgendes beinhaltend:
eine Spule (32), welche zum Drehen auf einem Rahmen (22) montiert ist; wobei die Spule (32) einen verriegelten Betriebsmodus und einen freilaufenden Betriebsmodus besitzt,
einen Gewebesensor (50) und/oder einen Fahrzeugsensor zum Initiieren der Verriegelung der Spule (32);
ein faltbares Glied (40), welches um den Umfang der Spule (32) positioniert ist, wobei das faltbare Glied (40) ein erstes Ende (102), ein zweites Ende (104) und ein Mittelteil dazwischen besitzt, wobei das faltbare Glied (40) anfänglich mit dem ersten Ende (102) an der Spule gesichert oder anderweitig an der Spule (32) befindlich positioniert ist, wobei das Mittelteil eine Reihe von Wellen (112a bis 112h) beinhaltet, welche durch angrenzende Gipfel und Täler gebildet werden, wobei jedes Tal konfiguriert ist, um anfänglich in großer Nähe zum Umfang der Spule (32) zu liegen, wobei das zweite Ende (104) des faltbaren Glieds (40) anfänglich angrenzend an und vom ersten Ende (102) entfernt positioniert ist, **dadurch gekennzeichnet, dass** das zweite Ende konfiguriert ist, um im Betrieb über das erste Ende (102) zu gleiten; wobei der Sitzgurt (411) beim Verlassen des Schlitzes (70) des Aufrollers (20) um die Wellen (112a bis 112h) des faltbaren Gliedes (40) gerollt wird und dadurch, dass das zweite Ende (104) des faltbaren Gliedes (40) konfiguriert ist, um zwischen einer angrenzenden Schleife des Sitzgurtes (411) zu gleiten und durch eine andere Schleife des Sitzgurtes (411) bedeckt zu werden.

2. Aufroller (20) nach Anspruch 1, bei welchem im Verlauf eines Unfalls der Sitzgurt (411) durch eine aufgebrachte Kraft gespannt wird, und wobei diese Kraft bei verriegelter Spule (32) durch die Anzahl von Schleifen wandert, welche um das faltbare Glied (40) herum befindlich sind, wodurch die Wellen (112a bis 112h) veranlasst werden, gegen den Mittelpunkt der Spule (32) gepresst zu werden.

3. Sitzgurtaufroller (20) nach Anspruch 2, bei welchem der Sitzgurt (411) radial und tangential in Bezug auf die Spule (32) durch eine aufgebrachte Kraft gespannt wird, wodurch die Sitzgurtschleifen (411) um das faltbare Glied (40) veranlasst werden, sich um das faltbare Glied (40) anzuziehen, wobei diese Anzugsgraft eine einwärtige radiale Kraft ist, welche in eine Richtung wirkt, um die Wellen (112a bis 112h) in Richtung der Spule (32) zusammenzupressen oder zu komprimieren und ebenfalls ein loses Ende (104) des Gliedes radial zwischen zwei Schichten des Sitzgurtes (411) zu schieben.

4. Sitzgurtaufroller nach Anspruch 1, bei welchem das faltbare Glied (40) aus einem Element der Gruppe besteht, bestehend aus Federstahl, wärmebehandeltem Stahl, Kunststoff oder Verbundschaum.

5. Verfahren zum kontrollierten Verzögern einer Vorwärtsbewegung eines Fahrzeuginsassen (404) in einem Crash durch Verwendung eines Systems nach Anspruch 1, wobei das System Folgendes beinhaltet:
a) ein Mehrpunkt-Sitzgurtsystem, beinhaltend einen Sitzgurtaufroller (20) mit einer Spule (32), wobei die Spule einen verriegelten Betriebsmodus und einen freilaufenden Betriebsmodus besitzt,
b) einen Sitzgurt (411), **dadurch gekennzeichnet, dass** er eine bekannte Dehnungsrate unter Spannung besitzt,
c) ein faltbares Glied (40), welches um einen Mittelpunkt oder einen Körperteil der Spule (32) des Aufrollers (20) gewunden ist, wobei das Glied (40) einen Anfangsdurchmesser d1 im ungespannten Zustand besitzt und zu einem geringeren Durchmesser d2 unter Spannung faltbar ist;
wobei das Verfahren folgende Schritte beinhaltet:
i. Detektieren eines Unfalls und Verriegeln der Spule (32) gegen Drehung;
ii. Zulassen, dass der Insasse (404) sich vorwärts bewegt und den Sitzgurt belastet;
iii. Zulassen, dass sich der Sitzgurt (411) dehnt und hierbei die auf den Insassen wirkende Energie (404) im Zuge des Crashs abbaut;
iv. Transferieren der Crash-Kraft des Insassen am Sitzgurt (411) an eine Druckkraft, die dazu tendiert, das Glied (40) zu falten;
v. Erzeugen einer verzögernden Kraft am Insassen (404), proportional zu dem Grad, in dem sich das faltbare Glied (40) faltet.
**dadurch gekennzeichnet, dass** es folgenden Schritt beinhaltet:
vi. Zulassen, dass ein freier Abschnitt bzw. ein Ende des faltbaren Gliedes (40) zwischen angrenzende Schleifen des Sitzgurtes (411) gleitet, während das faltbare Glied (40) sich faltet.

6. Verfahren nach Anspruch 5, welches den Schritt des Zulassens beinhaltet, dass der Sitzgurt (411) proportional zu dem Grad nachgibt, in welchem das Glied (40) sich radial gefaltet hat.

7. Verfahren nach Anspruch 5, bei welchem vor Initiierung des Faltens des Gliedes (40) X Rollen Sitzgurt um den mittleren Abschnitt der Spule (32) gewunden sind, und wobei, während es dem Sitzgurt (411) ermöglicht wird, nachzugeben, die Anzahl der Schleifen unverändert bleibt.

8. Verfahren nach Anspruch 5, bei welchem das Nachgeben des Sitzgurtes (411) durch die Form einer Welle oder durch Höhe und Länge, welche die Welle beschreiben, gesteuert wird.

9. Verfahren nach Anspruch 5, bei welchem das faltbare Glied (40) aus Kunststoff gebildet ist.

10. Verfahren nach Anspruch 5, bei welchem das faltbare Glied (40) aus gehärtetem Federstahl, einem Verbundkunststoff und Polymerschaummaterial gebildet ist.

## Revendications

1. Rétracteur de ceinture de sécurité (20) comprenant
une bobine (32) montée en rotation sur un cadre (22), la bobine (32) ayant un mode de fonctionnement verrouillé et un mode de fonctionnement à roue libre,
un capteur de bobine (50) et/ou un capteur de véhicule pour initier le verrouillage de la bobine (32),
un élément repliable (40) positionné autour de la circonférence de la bobine (32), l'élément repliable (40) comportant une première extrémité (102), une seconde extrémité (104) et un milieu entre les deux, l'élément repliable (40) étant initialement positionné avec la première extrémité (102) fixée à ou sinon située contre la bobine (32), le milieu incluant une pluralité d'ondulations (112a-112h) formées par des crêtes et des creux adjacents, chaque creux étant configuré pour se trouver initialement à proximité immédiate de la circonférence de la bobine (32), et la seconde extrémité (104) de l'élément repliable (40) étant initialement positionnée de façon adjacente à et espacée de la première extrémité (102),
**caractérisé en ce que** la seconde extrémité est configurée pour glisser sur la première extrémité (102) pendant le fonctionnement, la ceinture de sécurité (411), en sortant de la fente (70) du dit rétracteur (20) est enroulée autour des ondulations (112a-112h) de l'élément repliable (40) et **en ce que** la seconde extrémité (104) de l'élément repliable (40) est configurée pour glisser entre une boucle adjacente de la ceinture de sécurité (411) et être recouverte par une autre boucle de la ceinture de sécurité (411).

2. Rétracteur (20) selon la revendication 1, dans lequel, lors d'un accident, la ceinture de sécurité (411) est tendue par une force appliquée, et avec la bobine (32) bloquée, cette force migre à travers le nombre de boucles situées autour de l'élément repliable (40), en engendrant le pressage des ondulations (112a-112h) contre le centre de la bobine (32).

3. Rétracteur de ceinture de sécurité (20) selon la revendication 2, dans lequel la ceinture de sécurité (411) est tendue radialement et tangentiellement par rapport à la bobine (32) par une force appliquée, en provoquant le serrage des boucles de ceinture de sécurité (411) autour de l'élément repliable (40), dans lequel cette force de serrage est une force radiale vers l'intérieur, agissant dans une direction pour écraser ou comprimer les ondulations (112a-112h) vers la bobine (32) et aussi pour pousser radialement une extrémité libre (104) de l'élément entre deux nappes de la ceinture de sécurité (411).

4. Ceinture de sécurité selon la revendication 1, dans laquelle l'élément repliable (40) est constitué d'un acier à ressort, d'un acier traité thermiquement ou d'une mousse de plastique ou de composite.

5. Procédé pour ralentir de façon contrôlée le mouvement vers l'avant d'un occupant (404) d'un véhicule dans une collision en utilisant un système selon la revendication 1, le système comprenant :
a) un système de ceinture de sécurité multipoints comprenant un rétracteur de ceinture de sécurité (20) comportant une bobine (32), la bobine ayant un mode de fonctionnement verrouillé et un mode de fonctionnement en roue libre,
b) une ceinture de sécurité (411) **caractérisée en ce qu'**elle présente un taux d'allongement sous tension connu,
c) un élément repliable (40) enveloppé autour d'une partie centrale ou de corps de la bobine (32) du rétracteur (20), l'élément (40) ayant un diamètre initial d1 lorsqu'il est non tendu et pouvant être comprimé jusqu'à un diamètre inférieur d2 sous tension,
le procédé comprenant les étapes consistant à :
i. détecter un accident et bloquer la bobine (32) pour qu'elle ne puisse pas tourner,
ii. permettre à l'occupant (404) de se déplacer vers l'avant et charger la ceinture de sécurité,
iii. permettre à la ceinture de sécurité (411) de s'allonger et en agissant ainsi dissiper l'énergie agissant sur l'occupant (404) pendant la collision,
iv. transférer la force de collision de l'occupant sur la ceinture de sécurité (411) vers une force de compression tendant à comprimer l'élément (40),
v. générer une force de ralentissement sur l'occupant (404) proportionnelle au degré auquel l'élément repliable (40) s'aplatit,
**caractérisé en ce qu'**il comprend en outre l'étape consistant à :
vi. permettre à une partie ou une extrémité libre de l'élément qui s'aplatit (40) de glisser entre des boucles adjacentes de la ceinture de sécurité (411) tandis que l'élément repliable (40) s'aplatit.

6. Procédé selon la revendication 5, incluant l'étape consistant à permettre à la ceinture de sécurité de se dérouler proportionnellement au degré auquel l'élément (40) s'est radialement aplati.

7. Procédé selon la revendication 5, dans lequel, avant l'initiation de l'aplatissement de l'élément (40), il y a X enroulements de ceinture de sécurité enroulés autour de la partie centrale de la bobine (32) et dans lequel, lorsque la ceinture de sécurité (411) est autorisée à se dérouler, le nombre de boucles reste le même.

8. Procédé selon la revendication 5, dans lequel le déroulement de la ceinture de sécurité (411) est contrôlé par la forme de l'ondulation ou la hauteur et la longueur définissant l'ondulation.

9. Procédé selon la revendication 5, dans lequel l'élément repliable (40) est constitué de matière plastique.

10. Procédé selon la revendication 5, dans lequel l'élément repliable (40) est constitué d'acier à ressort trempé, de matière plastique composite ou de mousse de polymère.
